# EUROPÄISCHE PATENTANMELDUNG

(11) **EP 1 595 729 A2**
(43) Veröffentlichungstag der Anmeldung: **16.11.2005**
(21) Anmeldenummer: 05009919.1
(22) Anmeldetag: 06.05.2005
(51) Int. Cl.: B60J 7/20

(54) **Cabriolet-Fahrzeug**

(30) Priorität: 15.05.2004 DE 102004024228; 15.05.2004 DE 102004024227; 15.05.2004 DE 102004024229; 28.05.2004 DE 202004008475 U
(71) Anmelder: Wilhelm Karmann GmbH, 49084 Osnabrück (DE)
(72) Erfinder: Weissmüller, Olaf, 49565 Bramsche (DE); Böhnke, Achim, 49545 Tecklenburg (DE); Selle, Heinrich, 32549 Bad Oeynhausen (DE); Hahn, Stefan, 49143 Bissendorf (DE)

(57) **Zusammenfassung**

Ein Cabriolet-Fahrzeug (1) mit einem im hinteren Fahrzeugbereich in der Karosserie (7) unterhalb einer Durchtrittsebene (6) ablegbaren Dach (2), wobei zumindest ein Teil der Durchtrittsebene (6) bei geöffnetem Dach (2) von einer beweglichen, bei geschlossenem Dach (2) in Fahrtrichtung (F) vor dem hinteren Dachende und im Nahbereich hinter dem Insassenraum (9) gelegenen Verkleidung (10) abdeckbar ist, mit der zusammen zumindest ein in geöffneter Dachstellung mit diesem in Eingriff stehendes Halteteil (29) beweglich ist, wird so ausgebildet, daß das oder die Halteteil(e) (29) bei geöffnetem Dach (2) in und außer Eingriffsstellung beweglich ist oder sind (Fig. 3).

## Beschreibung

Die Erfindung betrifft ein Cabriolet-Fahrzeug mit zumindest einer beweglichen Verkleidung für einen Teil einer Durchtrittsebene des Daches durch die Karosserie nach dem Oberbegriff des Anspruchs 1 sowie eine zugehörige Verkleidung.

Es sind zahlreiche Cabriolet-Fahrzeuge bekannt, bei denen das Dach im hinteren Fahrzeugbereich unterhalb von Verkleidungsteilen, die die Durchtrittsebene des Daches durch die Oberseite der Karosserie teilweise oder vollständig optisch verschließen, ablegbar ist.

Die DE 196 35 869 C1 zeigt ein Cabriolet-Fahrzeug, bei dem eine an den Insassenraum rückwärtig anschließende und häufig auch als Hutablage bezeichnete Verkleidung bezüglich der Fahrtrichtung zwei hintereinander liegende Plattenteile umfaßt, wobei der Bewegungsmechanik des hinteren Plattenteils ein Halteteil für das abzulegende Dach zugeordnet ist. Das Halteteil ist in Gestalt einer u-förmigen Aufnahme für einen von dem vorderen Dachende des abgelegten Daches nach vorne ragenden Zentrierzapfen ausgebildet. Während der Dachöffnung legt sich der Zapfen zunächst auf eine dem Halteteil nachgeordnete Hebelauflage und verschwenkt diese mitsamt dem Halteteil und dem fest damit verbundenen Plattenteil bei weiter fortschreitender Dachablage. Eine solche Steuerung erfordert eine reibende Relativbewegung zwischen dem Zentrierzapfen einerseits und dem Auflagehebel sowie dem Halteteil andererseits. Dadurch kommt es zu erhöhtem Verschleiß. Zudem ist die Bewegung kompliziert, so daß es leicht zum Verkanten der Verkleidung kommen kann und in jedem Fall die Gesamtöffnungszeit des Daches relativ lang ist.

Der Erfindung liegt das Problem zugrunde, bei einem Cabriolet-Fahrzeug mit einer Haltehilfe für das geöffnete Dach unter Zuhilfenahme einer beweglichen Verkleidung eine Optimierung des Haltemechanismus zu erreichen.

Die Erfindung löst dieses Problem durch ein Cabriolet-Fahrzeug mit den Merkmalen des Anspruchs 1 sowie durch eine bewegliche Verkleidung mit den Merkmalen des Anspruchs 11. Hinsichtlich weiterer vorteilhafter Ausgestaltungen der Erfindung wird auf die abhängigen Ansprüche 2 bis 10 verwiesen.

Mit der Erfindung kann das Verkleidungsteil vollständig entkoppelt vom eigentlichen Dachöffnen oder -schließen bewegt werden. Eine Koppelbewegung der Verkleidung, verursacht von der Dachbewegung, entfällt. Somit kommt es auch nicht zu dem erhöhten Verschleiß durch Relativbewegung, und die Dachöffnungs- oder Schließzeit ist verkürzt. Die Bewegung der Verkleidung und des Halteteils zur Dachsicherung kann im Unterschied zur Dachbewegung beispielsweise auch schon in Fahrt des Fahrzeugs erfolgen, so daß die zur Dachöffnung erforderliche Stillstandzeit verkürzt ist.

Wenn die Verkleidung mit dem zumindest einen Halteteil durch einen eigenen Antrieb beweglich ist, kann dieser sehr leicht und raumsparend im Nahbereich der Verkleidung angeordnet sein; Kopplungsteile zum Dachantrieb sind entbehrlich.

Insbesondere ist die Verkleidung ein Plattenteil aus Leichtbaumaterial, etwa Kunststoff, so daß die zu bewegende Masse minimiert ist und der Antrieb von einem Elektromotor gebildet sein kann, der während der Dachbewegung unbewegt und erst bei vollständig abgelegtem Dach wirksam ist. Dieser kann sehr klein sein und Kantenlängen von in jeder Richtung nur wenigen Zentimetern aufweisen. Insbesondere kann er an einem Modul der Verkleidung angeordnet und bereits vor dessen Einbau in die Karosserie auch unabhängig vom Dach getestet werden.

Sofern die Verkleidung in Endstellung bei geöffnetem Dach als einziges äußeres Verkleidungsteil ein einstückiges Plattenteil umfaßt, ist sowohl das Gewicht reduziert als auch der Steuerungsaufwand verringert. Die einfachen Bewegungsabläufe verhindern ein Verkanten zuverlässig.

Vorteilhaft ist die Verkleidung mit Hilfe von zumindest einem bananenförmig eingewölbten Schwenkhebel beweglich, in dessen Einwölbung bei in Schließstellung liegender Verkleidung und geöffnetem Dach das bei geschlossenem Dach einem Windschutzscheibenrahmen zugewandte vordere Dachende ragt. Dadurch kann das vordere Dachende in geöffneter Stellung besonders weit nach vorne ragen. Der verbleibende Kofferraum ist dadurch vergrößert.

Für die Bewegungsabläufe ist es weiter besonders einfach, wenn das Halteteil zur Zusammenwirkung mit dem vorderen Dachende der Einwölbung des Schwenkhebels zugeordnet ist und durch Verschwenken der Verkleidung aus ihrer Offen- in ihre Schließstellung automatisch mit in Eingriff mit dem vorderen Dachende verlagerbar ist. Dann ist mit dem Verschwenken der Verkleidung in die die Durchtrittsebene verschließende und dann im wesentlichen horizontale Stellung zwangsweise die ordnungsgemäße Dachhalterung sichergestellt, ohne daß dies einzeln überprüft werden müßte, etwa durch zusätzliche Endlagenschalter. Fehlfunktionen oder -bedienungen sind insoweit ausgeschlossen.

Eine weitere Gewichtsreduzierung und Montagevereinfachung ergeben sich, wenn das eingreifende Halteteil einstückig an dem Schwenkhebel angeformt ist.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: ein erfindungsgemäßes Cabriolet-Fahrzeug bei geschlossenem Dach und einer in im wesentlichen vertikaler Offenstellung befindlichen Verkleidung,
- Fig. 2: das Fahrzeug nach Fig. 1 während der Dachöffnung kurz vor der vollständigen Dachablage bei noch unbewegter Verkleidung,
- Fig. 3: den Heckbereich des Fahrzeugs nach Fig. 2 bei jedoch vollständiger Ablage des geöffneten Daches, jedoch noch unbewegter Verkleidung,
- Fig. 4: eine ähnliche Ansicht wie Fig. 3 bei beginnendem Verschwenken der Verkleidung im Schließsinn und beginnendem Eingriff des Halteteils in das vordere Dachende,
- Fig. 5: eine ähnliche Ansicht wie Fig. 4 bei weiter fortschreitendem Verschwenken der Verkleidung im Schließsinn und weiter fortschreitendem Eingriff des Halteteils,
- Fig. 6: eine ähnliche Ansicht wie Fig. 5 bei vollständig geschlossener Verkleidung und durch Eingriff des Halteteils gesichertem vorderem Dachteil.

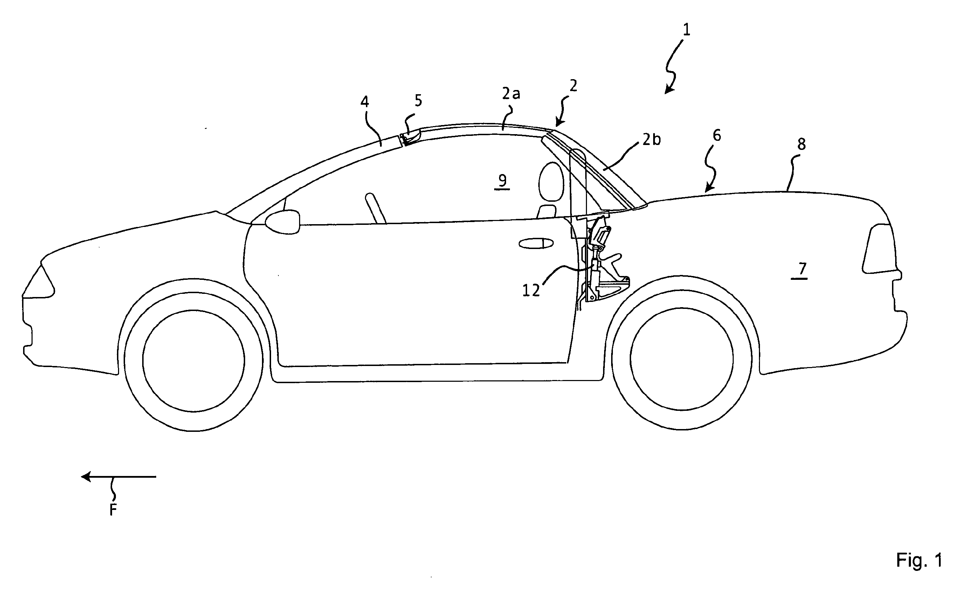

Das in der Zeichnung dargestellte Cabriolet-Fahrzeug 1 umfaßt ein bewegliches Dach 2, das mehrere - hier zwei - im geschlossenen Zustand (Fig. 1) aufeinander bezüglich der Fahrtrichtung F folgende Dachteile 2a, 2b umfaßt. Diese sind hier jeweils als feste Dachteile ausgebildet, was jedoch nicht zwingend ist. Ebenso ist ihre Anzahl variabel. Auch ein mit einem durchgehenden Bezug übergriffenes Soft-Top kommt in Betracht. In jedem Fall umfaßt das Dach 2 einen im geschlossenen Zustand dem Windschutzscheibenrahmen 4 zugewandten vorderen Dachbereich 5, der häufig auch als Dachspitze bezeichnet wird.

Das erfindungsgemäße Cabriolet-Fahrzeug 1 kann sowohl ein Zweisitzer als auch ein Cabriolet-Fahrzeug mit einem größeren Innenraum und etwa zwei Sitzreihen hintereinander sein.

In seinem geöffneten Zustand ist das Dach 2 zumindest im wesentlichen im heckwärtigen Karosseriebereich ablegbar. Am Fahrzeug 1 ist im Ausführungsbeispiel ein großer hinterer Teil der Durchtrittsebene 6 des Daches 2 durch die Oberseite der Karosserie 7 von einem Verdeckkastendeckel 8 und ein kleiner vorderer Teil von einer ein- oder mehrteiligen, bei geschlossenem Dach in Fahrtrichtung F vor dem hinteren Dachende und im Nahbereich hinter dem Insassenraum 9 gelegenen beweglichen Verkleidung 10 abdeckbar. Diese Verkleidung 10 wird häufig auch als Hutablage bezeichnet.

Sie ist hier von einem einstückigen Leichtbauteil, beispielweise aus Kunststoff oder einem metallischen Schaumwerkstoff, mit einer Erstrekkung in Fahrzeuglängsrichtung von nur wenigen Zentimetern ausgebildet. Sie ist dabei insgesamt Bestandteil einer als Modul ausgebildeten Baueinheit 11, die einen oder mehrere Antriebe 12 und eine die Antriebskraft vermittelnde Mehrgelenkanordnung - insgesamt mit 13 bezeichnet - umfaßt.

Das Modul 11 ist als vormontierte Einheit in einen Karosserierohbau einsetzbar und umfaßt eine nahezu vertikal stehende Vorderwand 14, die an einer den Insassenraum 9 begrenzenden Rückwand 15 der Karosserie 7 festlegbar ist.

Der in der Zeichnung dargestellte zentrale Antrieb 12 ist von einem Hydraulikzylinder gebildet; auch ein Hydraulik- oder Pneumatikantrieb oder insbesondere eine Elektromotor kommt alternativ in Betracht.

Während der Dachbewegung ist der Antrieb 12 hier unbewegt. Daher wird die Verkleidung 10 erst nach vollständiger Ablage des Daches 2 in der Karosserie 7 geschlossen und vor der ersten Dachbewegung im Schließsinn geöffnet. Bei geschlossenem Dach 2 kann die Verkleidung 10 in geöffneter Stellung verbleiben. Dies ist jedoch nicht zwingend.

Die Verkleidung 10 ist hier zwischen einer im wesentlichen horizontalen Schließstellung bei geöffnetem Dach 2 und einer im wesentlichen vertikalen Offenstellung bei geschlossenem Dach 2 beweglich. Hierfür greift der hier einzige, im Nahbereich der Fahrzeugquermitte liegende Antrieb 12 mittelbar oder unmittelbar am in Fahrtrichtung F vorderen Bereich V der Verkleidung 10 an.

Der Antrieb 12 ist an dem Modul 11 über ein Kugelgelenk und an der Verkleidung 10 über eine quer zum Fahrzeug 1 liegende Horizontalschwenkachse angekoppelt. Er kann daher seinen Winkel gegenüber der Vertikalen während der Bewegung derart ändern, daß er während der Öffnung der Verkleidung 10 steiler gestellt wird und sich somit an die Vorderwand 14 anlegt, so daß die Vorderkante V der Verkleidung 10 hierbei nicht nur nach unten, sondern auch nach vorne bewegt wird.

Die Verkleidung 10 ist im montierten Zustand an jeder Fahrzeugquerseite über eine Mehrgelenkanordnung 13 beweglich gehalten. Diese umfaßt einen ersten Schwenklenker 22, der sich vom oberen Bereich der Vorderwand 14 zum vorderen Kantenbereich V der Verkleidung 10 erstreckt, und über einen bananenförmig eingewölbten Schwenklenker 23, der sich vom hinteren Bereich eines von der Vorderwand 14 entgegen der Fahrtrichtung F weisenden Auslegers 24 zum hinteren Kantenbereich H der Verkleidung 10 erstreckt, beweglich. Der Hebel 22 greift an einer im Nahbereich der Vorderkante V der Verkleidung 10 gelegenen horizontalen Schwenkachse 26 an dieser an, der Schwenklenker 23 an einer im Nahbereich zur hinteren Kante H der Verkleidung 10 gelegenen Schwenkachse 28.

Die Mehrgelenkanordnung 13 bildet daher hier ein konstruktiv einfaches Viergelenk aus. Dieses umfaßt die horizontalen Schwenkachsen 25, 26 des ersten Schwenklenkers 22 und die ebenfalls horizontalen Schwenkachsen 27, 28 des eingewölbten Schwenklenkers 23.

In die Einwölbung des Schwenklenkers 23 ragt bei in Schließstellung liegender Verkleidung und geöffnetem Dach 2 das bei geschlossenem Dach einem Windschutzscheibenrahmen 4 zugewandte vordere Dachende 5. Dieses kann durch die Gestaltung des Schwenklenkers 23 damit sehr platzsparend und weit vorne im Fahrzeug 1 untergebracht werden.

Dadurch, daß die Verkleidung 10 erst bei vollständig abgelegtem Dach 2 geschlossen wird, ist eine Kollision mit dem bewegten Dach 2 dabei ausgeschlossen.

Zumindest einem der beiden seitlichen Schwenklenker 23 ist in seiner Krümmung erfindungsgemäß ein Halteteil 29 zugeordnet, das bei geöffnetem Dach 2 in die Dachspitze 5 des abgelegten Daches 2 eingreift und dieses dadurch in seiner Lage gegen Bewegungen sichert, so daß dieses auch zum Beispiel beim Überfahren von Fahrbahnunebenheiten nicht in insbesondere aufwärts gerichtete Bewegung kommen kann. Dabei kann das Halteteil 29 eine in der Dachspitze 5 vorhandene Ausnehmung nutzen, die auch zu dessen Festlegung am Windschutzscheibenrahmen 4 bei geschlossenem Dach 2 genutzt wird. Hier liegen an beiden Fahrzeugseiten gleiche Verhältnisse vor. Das Halteteil 29 ist jeweils einstückig an den Schwenklenker 23 angeformt.

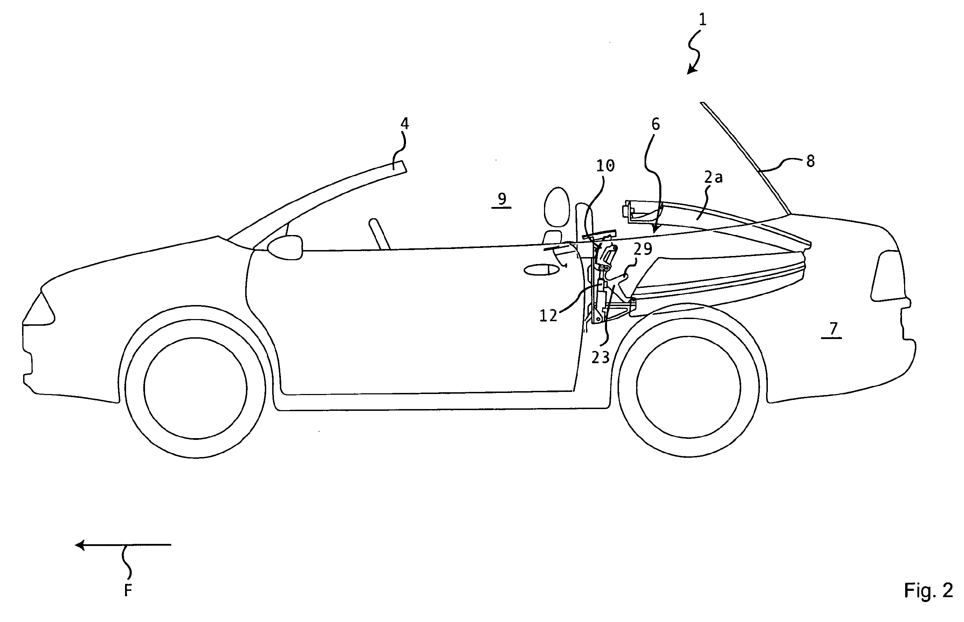

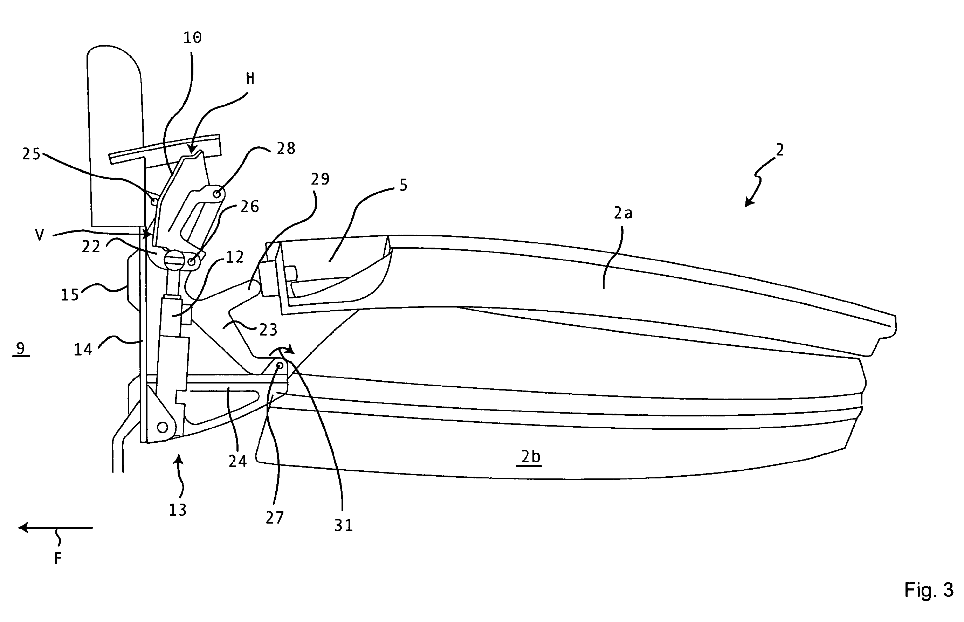

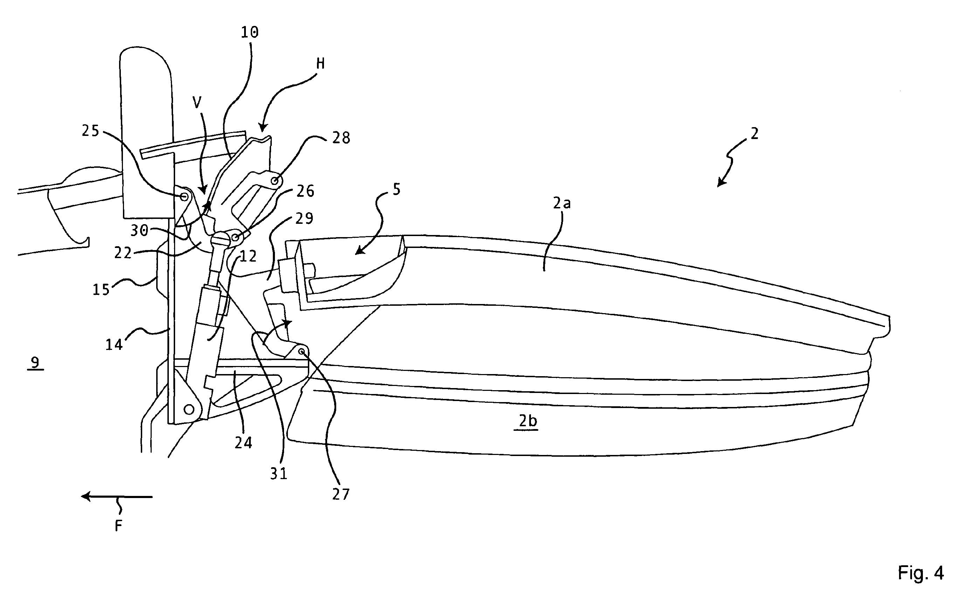

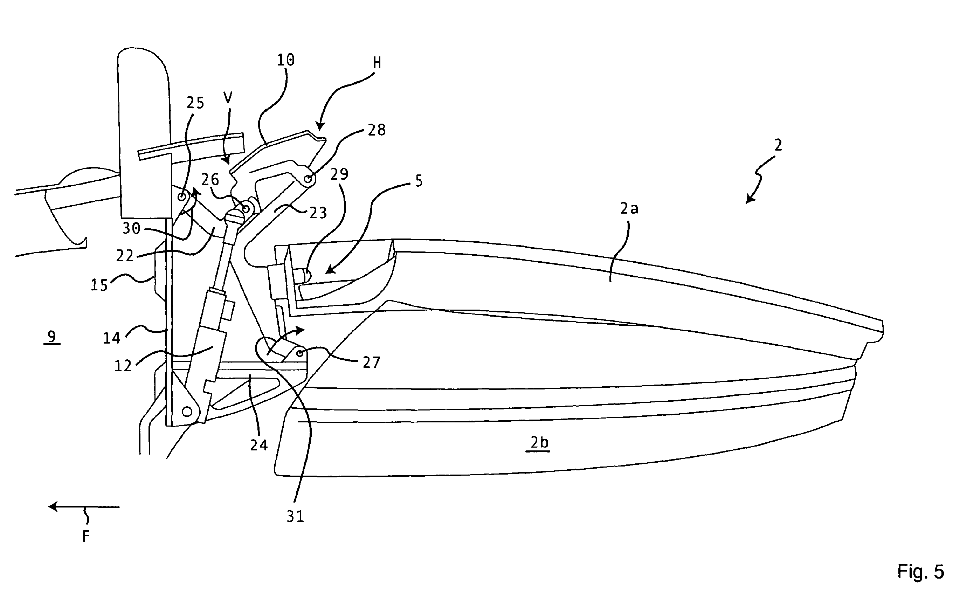

Eine Überführung der Verkleidung 10 aus ihrer offenen in die geschlossene Stellung (in Fig. 3 bis Fig. 6 vergrößert herausgezeichnet) findet erfindungsgemäß bei abgelegtem Dach (Fig. 4 bis Fig. 6) statt, nachdem dieses seine Öffnungsbewegung gemäß den Figuren 1 bis 3 vollständig durchlaufen hat.

Für das Schließen der Verkleidung 10 schwenkt durch den Antrieb 12 der hier selbst nicht angetriebene erste Schwenklenker 22 um seine der Vorderwand 14 zugewandte Achse 25 in Richtung des Pfeils 30 aufwärts. Gleichzeitig schwenkt der zweite, bananenförmige oder ähnlich abgeknickte Schwenklenker 23 um seine am Ausleger 24 gelegene Achse 27 gegensinnig in Richtung des Pfeils 31 aufwärts.

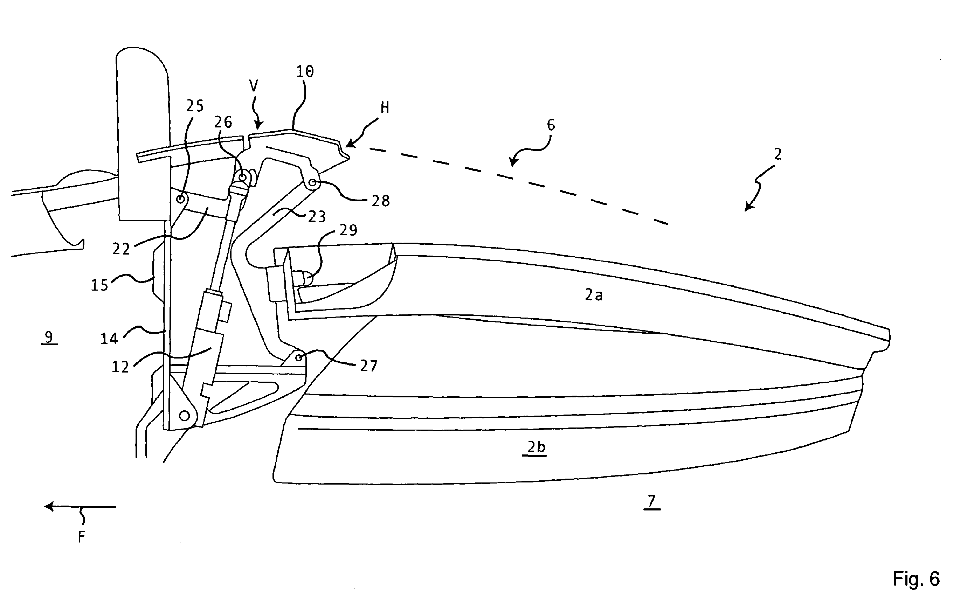

Dadurch, daß der Ausleger 24 mit der Schwenkachse 27 weit unten gelegen ist und sich der eingewölbte Schwenklenker 23 bei geöffneter Verkleidung 10 daran angelegt ist, kann die Dachspitze 5 in Fahrtrichtung weit nach vorne bis in einen Raum ragen, der von der Verkleidung 10 überdeckbar ist (Fig. 6) und bis auf wenige Zentimeter an die Vorderwand 14 heranrückt, ohne mit der Schwenkachse 27 oder anderen Teilen zu kollidieren. Durch die Einwölbung des Schwenklenkers 23 beläßt dieser auch beim Schwenken in Richtung des Pfeils 31 zum Schließen der Verkleidung 10 außerhalb des Halteteils 29 genügend Freiraum für die Dachspitze 5. Bei diesem Schwenken greift das Halteteil 29 kraftschlüssig oder zumindest in Endstellung (Fig. 6) formschlüssig in die Dachspitze 5 sichernd ein. Dabei kann diese durch das Halteteil 29 nach Art einer Zentrierung in vertikaler und/oder horizontaler Richtung geringfügig bewegt und justiert werden.

## Patentansprüche

1. Cabriolet-Fahrzeug (1) mit einem im hinteren Fahrzeugbereich in der Karosserie (7) unterhalb einer Durchtrittsebene (6) ablegbaren Dach (2), wobei zumindest ein Teil der Durchtrittsebene (6) bei geöffnetem Dach (2) von einer beweglichen, bei geschlossenem Dach (2) in Fahrtrichtung (F) vor dem hinteren Dachende und im Nahbereich hinter dem Insassenraum (9) gelegenen Verkleidung (10) abdeckbar ist, mit der zusammen zumindest ein in geöffneter Dachstellung mit diesem in Eingriff stehendes Halteteil (29) zur Sicherung des geöffneten Daches beweglich ist,
**dadurch gekennzeichnet,**
**daß** das oder die Halteteil(e) (29) bei geöffnetem Dach (2) in und außer Eingriffsstellung beweglich ist oder sind.

2. Cabriolet-Fahrzeug (1) nach Anspruch 1
**dadurch gekennzeichnet,**
**daß** die Verkleidung (10) mit dem zumindest einen Halteteil (29) durch einen eigenen Antrieb (12) beweglich ist.

3. Cabriolet-Fahrzeug (1) nach Anspruch 2,
**dadurch gekennzeichnet,**
**daß** der Antrieb (12) von einem Elektromotor gebildet ist, der während der Dachbewegung unbewegt ist.

4. Cabriolet-Fahrzeug (1) nach einem der Ansprüche 1 bis 3,
**dadurch gekennzeichnet,**
**daß** die Verkleidung (10) in Endstellung bei geöffnetem Dach (2) als einziges äußeres Verkleidungsteil ein einstückiges Plattenteil umfaßt.

5. Cabriolet-Fahrzeug (1) nach einem der Ansprüche 1 bis 4,
**dadurch gekennzeichnet,**
**daß** die Verkleidung (10) zwischen einer im wesentlichen horizontalen Schließstellung bei geöffnetem Dach (2) und einer im wesentlichen vertikalen Offenstellung bei geschlossenem Dach (2) beweglich ist.

6. Cabriolet-Fahrzeug (1) nach Anspruch 5,
**dadurch gekennzeichnet,**
**daß** die Verkleidung (10) mit Hilfe von zumindest einem bananenförmig eingewölbten Schwenkhebel (23) beweglich ist, in dessen Einwölbung bei in Schließstellung liegender Verkleidung (10) und geöffnetem Dach (2) das bei geschlossenem Dach einem Windschutzscheibenrahmen (4) zugewandte vordere Dachende (5) ragt.

7. Cabriolet-Fahrzeug (1) nach Anspruch 6,
**dadurch gekennzeichnet,**
**daß** ein oder jedes Halteteil (29) zur Zusammenwirkung mit dem vorderen Dachende (5) der Einwölbung des Schwenkhebels (23) zugeordnet ist.

8. Cabriolet-Fahrzeug (1) nach Anspruch 7,
**dadurch gekennzeichnet,**
**daß** das oder jedes Halteteil (29) durch Verschwenken der Verkleidung (10) aus ihrer Offen- in ihre Schließstellung in Eingriff mit dem vorderen Dachende (5) verlagerbar ist.

9. Cabriolet-Fahrzeug (1) nach einem der Ansprüche 7 oder 8,
**dadurch gekennzeichnet,**
**daß** das oder jedes Halteteil (29) einstückig an einen Schwenkhebel (23) angeformt ist.

10. Cabriolet-Fahrzeug (1) nach einem der Ansprüche 1 bis 9,
**dadurch gekennzeichnet,**
**daß** der Eingriff des oder jedes Halteteils (29) in das vordere Dachende (5) formschlüssig ist.

11. Bewegliche Verkleidung (10) für ein Cabriolet-Fahrzeug (1) nach einem der Ansprüche 1 bis 10.
